# EUROPEAN PATENT SPECIFICATION

(11) **EP 1 833 686 B1**
(45) Date of publication and mention of the grant of the patent: **11.03.2009**
(21) Application number: 04804365.7
(22) Date of filing: 23.12.2004
(51) Int. Cl.: B60C 1/00, C08L 9/06, C08L 23/22

(54) **PNEUMATIC TYRE**
LUFTREIFEN
PNEUMATIQUE

(43) Date of publication of application: 19.09.2007
(73) Proprietor: PIRELLI TYRE S.p.A., 20126 Milano (IT)
(72) Inventor: ROMANI, Francesco Pirelli Tyre S.p.A., I-20126 Milano (IT); DE CANCELLIS, Pierluigi Pirelli Tyre S.p.A., I-20126 Milano (IT)
(74) Representative: Bottero, Claudio
(86) International application number: PCT/EP2004/014779
(87) International publication number: WO 2006/066615

(56) References cited:
- EP-A- 0 527 396
- EP-A- 0 816 420
- EP-A- 1 215 240

## Description

### Background of the invention

The present invention relates to a pneumatic tyre, in particular for high performance.

Specifically, the present invention refers to a pneumatic tyre comprising a carcass structure having at least one carcass ply, and at least one annular reinforcing structure associated to the carcass ply, a tread band made of an elastomeric material at a radially outer position with respect to the carcass structure, a belt structure interposed between the carcass structure and the tread band and a pair of axially opposite sidewalls on the carcass structure, wherein the tread band is provided with a pattern comprising one or more longitudinal and/or transversal grooves.

### Prior art

Tyre properties such as grip on wet surfaces and wear resistance, that are of great importance for the handling and running stability of the vehicle, are determined, to a large extant, by the composition of the tread band rubber composition.

Grip is favoured by a tread rubber compound having high hysteresis values (tanδ). On the other side, a tread rubber compound having low hysteresis values shows improved wear resistance. A balance between these properties is an issue.

Many attempts have been made to introduce halogenated butyl rubber into the tread band composition so as to improve the tyre grip. However, the addition of a halogenated butyl rubber (XIIR) to the tread band composition, although improving the tyre grip, causes a concomitant reduction of the wear resistance. As reported, for example, by EP 1 111 004, the poor wear resistance of butyl compounds is due to one or both of the following causes: (i) poor interaction between the butyl elastomer and filler, and (ii) low level of crosslinking compared to polybutadiene (BR) or styrene- butadiene rubbers (SBR).

EP 1 111 004 relates to filled butyl elastomer compositions, suitable for tire treads and sidewall, comprising a halogenated butyl elastomer with a filler, especially a mineral filler, such as silica, in the presence of a silane having at least one hydroxy group or hydrolysable group attached to a silicon atom of the silane. The halobutyl elastomer may be a mixture with other elastomers. The halobutyl elastomer should constitute more than 20% of any such mixture. The silane is preferably an aminosilane or a sulphur-containing silane; the amount of the silane compound or compounds used may be about 2 to 12 parts per hundred parts of filler. Examples are provided of elastomer compositions containing 100 phr of halogenated butyl elastomer and from 3 phr to 12 phr of 3-aminopropyl triethoxysilane or bis(triethoxysilyl-propyl)tetrasulfane.

EP 1 236 767 provides an elastomeric composition comprising natural rubber, a halobutyl rubber, a mineral filler, preferably silica, and a rubber-mineral filler bonding agent. The bonding agent can be a silane or mixture of silanes. The silane has at least one hydroxy group or hydrolysable group attached to the silane. Particular silanes that can be used include an aminosilane or a sulphur-containing silane. The amount of the silane compound or compounds used may be about 2 to 12 parts per hundred parts of filler. The halobutyl elastomer should constitute more than 5% of any such mixture. It is preferred not to use further elastomers but to use the halobutyl elastomer and natural rubber as the sole elastomers. If further elastomers are to be used, however, then the further elastomer may be, for example, polybutadiene, styrene-butadiene or polychloroprene or an elastomer compound containing one or more of these elastomers.

EP 816 420 discloses a rubber composition for tyre treads comprising, among the other components, styrene-butadiene rubber, a diene rubber, an aminosilane containing at least one hydrolysable group attached to the silicon atom, to improve abrasion resistance.

EP 1 215 240 discloses rubber compositions for tyre treads comprising, among the other components, styrene-butadiene rubber and a halogenated rubber compound. In particular, it discloses a comparative composition showing an improved wet grip. However, said comparative composition also shows an undesired loss of wear resistance.

EP 527 396 discloses an abrasion-resistant halogenated isobutylene-based rubber composition having good traction characteristics. In a preferred embodiment, the composition comprises a halogenated isobutylene rubber, styrene/butadiene rubber and polybutadiene rubber combined with carbon black and a silane-coupled silica filler. In automobile tire treads, tire retreads, and other anti-skid materials, the composition exhibits viscoelastic properties offering excellent traction and good rolling resistance with no loss in tire treadwear.

### Summary of the invention

The Applicant observed that the advantages possibly provided by a halobutyl rubber to the tread band compound of a pneumatic tyre were still too hindered by drawbacks for an effective, practical application.

In particular, the Applicant observed that a tyre tread band suitable for wet or icy/snowed surfaces should be based on an elastomeric composition balancing the following characteristics:
- low hardness at low temperatures for ensuring a suitable grip;
- high values of static modulus that favour the tyre handling;
- high tanδ values that are correlated with good traction and performance, in particular high tanδ at 0°C for wet and icy/snowed surfaces.
- low abrasion.

In addition, processability of the elastomeric composition should be suitable for tyre production in terms of scorch time and Mooney viscosity.

The Applicant found that a tyre for vehicles provided with a tread band obtained by cross-linking a composition comprising styrene-butadiene rubber, halogenated butyl rubber in an amount as defined hereinbelow, and an aminosilane in an amount as defined hereinbelow, shows improved performance on wet or icy/snowed surfaces in terms of grip, wear resistance and handling, thus enhancing the safety and comfort of the vehicle equipped with such tyre, even under extreme driving conditions.

Therefore, the present invention relates to a pneumatic tyre comprising:
- a carcass structure with at least one carcass ply shaped in a substantially toroidal configuration, the opposite lateral edges of which are associated with respective right-hand and left-hand bead wires, each bead wire being enclosed in a respective bead;
- a belt structure comprising at least one belt layer applied in a circumferentially external position relative to said carcass structure;
- a tread band superimposed circumferentially on said belt structure comprising a radially outer layer designed to come into contact with the ground; and
- a pair of sidewalls applied laterally on opposite sides relative to said carcass structure;
wherein said tread band includes an elastomeric material obtained by cross-linking a cross-linkable elastomeric composition comprising:
a) from 15 phr to 95 phr of at least one styrene-butadiene rubber;
b) from 5 phr to 30 phr of at least one halogenated butyl rubber;
c) from 0 phr to 60 phr of at least one diene rubber other than a);
d) from 0.3 phr to 3.5 phr of at least one aminosilane containing at least one hydroxy group or hydrolysable group attached to the silicon atom of the silane;
e) from 10 phr to 140 phr of at least one silica filler; and
f) from 0.5 phr to 25 phr of at least one sulphur-containing silane with at least one hydroxy group or hydrolysable group attached to the silicon atom of the silane.

According to another aspect, the present invention relates to a cross-linkable elastomeric composition comprising:
a) from 15 phr to 95 phr of at least one styrene-butadiene rubber;
b) from 5 phr to 30 phr of at least one halogenated butyl rubber;
c) from 0 phr to 60 phr of at least one diene rubber other than a);
d) from 0.3 phr to 3.5 phr of at least one aminosilane containing at least one hydroxy group or hydrolysable group attached to the silicon atom of the silane;
e) from 10 phr to 140 phr of at least one silica filler; and
f) from 0.5 phr to 25 phr of at least one sulphur-containing silane with at least one hydroxy group or hydrolysable group attached to the silicon atom of the silane.

For the purposes of the present description and of the claims that follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

For the purposes of the present description and of the claims, the term "phr" means the parts by weight of a given component of the elastomeric composition per 100 parts by weight of the elastomeric base.

According to a preferred embodiment, the elastomeric composition comprises from 75 phr to 93 phr of a styrene-butadiene rubber a) (hereinafter also referred to as "SBR).

In the present description an claims, as "styrene-butadiene rubber" or "SBR" is meant a styrene/1,3-butadiene random copolymer typically comprising from 55 wt% to 95 wt% of 1,3-butadiene.

According to a preferred embodiment, the elastomeric composition comprises from 7 phr to 25 phr of a halogenated butyl rubber b).

Preferably, the halogenated butyl rubber according to the invention is a chlorinated or brominated butyl rubber. Brominated rubbers are particularly preferred.

Advantageously, halogenated butyl rubbers suitable for the present invention are obtained by halogenation of butyl rubber, that is a copolymer of isobutylene and at least one comonomer selected from C₄ to C₆ conjugated diolefins, preferably isoprene; and alkyl-substituted vinyl aromatic comonomers such as C₁-C₄-alkyl substituted styrene. One example that is commercially available is halogenated isobutylene methylstyrene copolymer (BIMS) in which the comonomer is p-methylstyrene.

Preferably, isoprene is present in an amount of from 1 wt% to 3 wt% and isobutylene is present in an amount of from 97 wt% to 99 wt% .

The halogen content of said rubbers preferably ranges from 0.5 wt% to 4 wt%, preferably from 0.75 wt% to 3 wt% of halogen based on the halogenated butyl polymer.

Preferably, the halogenated butyl rubber has a viscosimetric average molecular weight comprised between 150,000 and 1,500,000 and a molar unsaturation comprised between 0.5% and 15%.

A stabilizer may be added to the halogenated butyl rubber. Suitable stabilizers include calcium stearate and epoxidized soybean oil, preferably used in an amount of in the range of from 0.5 to 5 parts by weight per 100 parts by weight of the halogenated butyl rubber.

Examples of suitable halogenated butyl rubbers include Bayer® Brominated butyl BB2040 and BB2030, commercially available from Bayer. Bayer® Brominated butyl BB2040 has bromine content of 2.0 ± 0.3 wt%. Bayer® Brominated butyl BB2030 has bromine content of 1.8 ± 0.2 wt%.

Examples of suitable chlorinated butyl rubbers include Bayer® Chlorobutyl CB1240, also commercially available from Bayer. Bayer® Chlorobutyl CB 1240 has chlorine content of 1.25 ± 0.1 wt%.

According to a preferred embodiment, the elastomeric composition comprises from 0 phr to 30 phr of a diene rubber c), more preferably c) is absent.

Examples of diene rubbers c) which are useful for the purpose of the invention are: polyisoprene, e.g. cis-1,4-polyisoprene (natural or synthetic, preferably natural rubber, NR) and 3,4-polyisoprene; polybutadiene (in particular polybutadiene with a 1,4-cis content of at least 80%); isoprene/isobutene copolymers; 1,3-butadiene/acrylonitrile copolymers; styrene/isoprene/1,3-butadiene copolymers; styrene/1,3-butadiene/acrylonitrile copolymers; or mixtures thereof.

According to a preferred embodiment, the elastomeric composition comprises from 1 phr to 3 phr of an aminosilane d).

Advantageously, the content in aminosilane d) is tailored on the content in halogenated butyl rubber b). The aminosilane d), owing to the nucleophilic nature thereof, reacts with the halogenated butyl rubber, and provides a "bridge" between such rubber and the silica filler e), thus achieving a compatibilization effect between the halogenated butyl rubber b) and the other elastomeric composition components.

Advantageously, in the elastomeric composition of the invention the weight ratio between b) and d) components is of from 2 to 12, preferably of from 5 to 8.

In the present description and claims, as "hydrolysable group" is meant a group that is able to hydrolyse to yield a hydroxy group on the silicon atom. As examples of such hydrolysable groups there are mentioned particularly alkoxy groups having up to six carbon atoms, especially ethoxy and methoxy groups. These and other hydrolysable groups are discussed hereinbelow.

Preferably, an aminosilane d) useful for the present invention has the following formula (I) 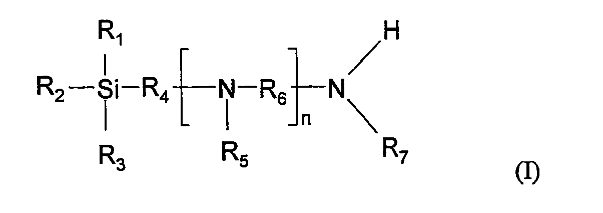 wherein:
R₁, R₂ and R₃, which may be identical or different, are selected from hydrogen, hydroxy, C₁-C₈ alkoxy groups, C₁-C₁₈ alkyl groups, C₆-C₂₀ aryl groups, C₇-C₃₀ alkylaryl or arylalkyl groups, with the proviso that at least one of the groups R₁, R₂ and R₃ represents an hydroxy or an hydrolysable group;
R₄ is selected from linear or branched C₁-C₁₈ aliphatic chains groups, C₆-C₂₀ arylene groups, said arylene groups optionally being substituted with C₁-C₈ aliphatic groups;
R₅ and R₇, which may be identical or different, are selected from hydrogen, C₁-C₁₈ alkyl groups; or, when R₅ and R₇ are other than hydrogen, they may form, together with the nitrogen atoms to which they are attached, 5- or 6-membered heterocyclic rings;
R₆ is chosen from linear or branched C₁-C₁₈ alkylene groups, C₆-C₁₄ arylene groups, arylene groups optionally substituted with C₁-C₁₈ alkyl groups, C₇-C₃₀ alkylenearylene or arylenealkylene groups, C₃-C₃₀ cycloalkylene groups, said cycloalkylene groups optionally being substituted with C₁-C₁₈ alkyl groups;
n is a integer from 0 to 5.

In the aminosilane of formula I, it is preferred that all of R_{1,} R₂ and R₃ are hydrolysable groups, in particular C₁-C₈ alkoxy groups, more preferably C₁-C₃ alkoxy groups. Optionally, said alkoxy groups show the alkyl chain interrupted by oxygen atoms, such as CH₃OCH₂O-, CH₃OCH₂OCH₂O-, CH₃(OCH₂)₄O-, CH₃OCH₂CH₂O-, C₂H₅OCH₂O-, C₂H₅OCH₂OCH₂O-, or C₂H₅OCH₂CH₂O-.

Non-limiting examples of R₁, R₂ and R₃ that are not hydrolysable include C₁₋₁₀ alkyl, C₂₋₁₀ mono- or di-unsaturated alkenyl, and phenyl.

Preferably, R₄ is a C₁-C₃ aliphatic chain, more preferably a C₁-C₃ alkylene chain.

Preferably, R₇ is hydrogen.

Preferably, n is 0.

Suitable aminosilanes of formula I include, but are not limited to 2-aminoethyl-trimethoxysilane, 2-aminoethyl-triethoxysilane, 2-aminoethyl-tripropoxysilane, 2-aminoethyl-tributoxysilane, 3-aminopropyl-trimethoxysilane, 3-aminopropyl-triethoxysilane, 3-aminopropylmethyl-diethoxysilane, N-2-(vinylbenzylamino)-ethyl-3-aminopropyl-trimethoxysilane, N-(2-aminoethyl)-3-aminopropyl-trimethoxysilane, N-2-(aminoethyl)-3 aminopropyltris(2-ethylhexoxy)silane, 3-aminopropyl-diisopropyl-ethoxysilane, N-(6-aminohexyl)-aminopropyl-trimethoxysilane, 4-aminobutyl-triethoxysilane, 4-aminobutyldimethyl-methoxysilane, triethoxy-silylpropyl-diethylenetriamine, 3-aminopropyltris-(methoxyethoxyethoxy)silane, N-(2-aminoethyl)-3-aminopropyl-trimethoxysilane, N-2-(aminoethyl)-3-aminopropyltris(2-ethylhexoxy)-silane, 3-aminopropyldiisopropyl-ethoxysilane, N-(6-aminohexyl)aminopropyl-trimethoxysilane, 4-aminobutyl-triethoxysilane, and (cyclohexylaminomethyl)-methyldiethoxysilane.

3-Aminopropyl-triethoxysilane (AMEO) is the most preferred.

According to a preferred embodiment, the elastomeric composition comprises from 40 phr to 110 phr of silica filler e).

Advantageously, the silica is a pyrogenic silica or, preferably, a precipitated silica, with a BET surface area (measured according to ISO standard 5794/1) of from 50 m²/g to 500 m²/g, preferably from 70 m²/g to 200 m²/g.

Suitable silica fillers are available under the trademarks HiSil® 210, HiSil® 233 and HiSil® 243 from PPG Industries Inc. Also suitable are Vulkasil® S and Vullcasil® N, from Bayer AG, and Zeosil® from Rhodia Silica System.

Optionally, the elastomeric composition may comprise at least one carbon black reinforcing filler. Advantageously, the carbon black reinforcing filler is selected from those having a surface area of not less than 20 m²/g (determined by CTAB absorption as described in Standard ISO 6810:1995).

Said carbon black reinforcing filler can be present in the elastomeric composition in an amount of from 20 phr to 90 phr.

According to a preferred embodiment, the elastomeric composition comprises from 5 phr to 15 phr of a sulphur-containing silane f).

Examples of suitable sulphur-containing silanes include compounds of formula (II)

(R)₃Si-CₙH₂ₙ-X (II)

wherein the groups R, which may be identical or different, are selected from: hydroxy, alkyl, alkoxy or aryloxy groups or from halogen atoms, on condition that at least one of the groups R is a hydroxy, alkoxy or aryloxy group; n is an integer between 1 and 6 inclusive; X is a group selected from: nitroso, mercapto, amino, epoxide, vinyl, imide, chloro, -(S)ₘCₙH₂ₙ-Si-(R)₃ in which m and n are integers between 1 and 6 inclusive and the groups R are defined as above.

Non-limiting illustrative examples of a sulphur-containing silane f) include the following:
bis[3-(trimethoxysilyl)propyl]-tetrasulfane,
bis [3-(triethoxysilyl)propyl]disulfane,
bis [2-(trimethoxysilyl)ethyl]tetrasulfane,
bis[2-(triethoxysilyl)ethyl]trisulfane,
bis[3-(trimethoxysilyl)propyl]disulfane,
3-mercaptopropyltrimethoxysilane,
3-mercaptopropylmethyldiethoxysilane, and
3-mercaptoethylpropylethoxymethoxysilane.
Bis[3-(trimethoxysilyl)propyl]-tetrasulfane (TESPT) and bis(3-triethoxysilylpropyl) disulphide are preferred.

The sulphur-containing silane f) may be used as such or admixed with an inert filler (for example carbon black) so as to facilitate its incorporation into the elastomeric composition.

The elastomeric composition according to the present invention may be vulcanised according to known techniques, in particular with sulphur-based vulcanising systems commonly used for diene elastomeric polymers. To this end, in the composition, after a first stage of thermal-mechanical processing, a sulphur-based vulcanising agent is incorporated together with vulcanisation accelerators and activators. In this second processing stage, the temperature is generally kept below 120°C and preferably below 100°C, so as to avoid any unwanted pre-cross-linking phenomena.

The vulcanising agent most advantageously used is sulphur, or molecules containing sulphur (sulphur donors), with accelerators and activators known to those skilled in the art.

Advantageously, the elastomeric composition according to the invention further comprises at least one resin cure system. Examples of resin cure systems are phenolic resins, in particular, phenolic resins obtained by condensation polymerization of a phenol and formaldehyde, commonly known as resol and novolac. In resol resin, the phenol bears reactive groups such as methylol groups.

Advantageously, resin cure systems are used in amounts of from 1 to 15 phr, preferably from 2 to 10 phr.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed *in situ* in the elastomeric composition from ZnO and fatty acid, and also BiO, PbO, Pb₃O₄, PbO₂, or mixtures thereof.

Accelerators that are commonly used may be chosen from: dithiocarbamates, guanidine, diphenyl-guanidine, thiourea, thiazoles, sulphenamides, thiurams, amines, xanthates, or mixtures thereof.

The elastomeric composition according to the present invention may comprise other commonly used additives chosen on the basis of the specific application for which the composition is intended. For example, the following may be added to said composition: antioxidants, anti-ageing agents, plasticizers, adhesives, anti-ozone agents, modifying resins, fibres (for example Kevlar® pulp), or mixtures thereof.

In particular, for the purpose of further improving the processability, a plasticizer generally chosen from mineral oils, vegetable oils, synthetic oils, or mixtures thereof, such as, for example, aromatic oil, naphthenic oil, phthalates, soybean oil, or mixtures thereof, may be added to the elastomeric composition according to the present invention.

Preferably, the amount of plasticizer ranges from 2 phr to 100 phr, more preferably from 5 phr to 70 phr.

The elastomeric composition according to the present invention may be prepared by mixing together the rubber components with the silica filler and with the silanes d) and f) according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss) or of co-rotating or counter-rotating twin-screw type.

### Brief description of the drawing

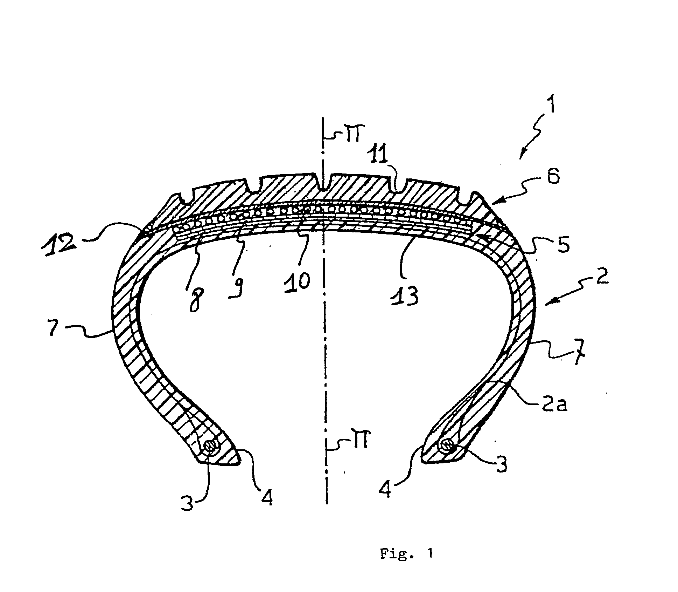

The invention will be further illustrated hereinafter with reference to the following examples and figures, wherein the attached Figure 1 shows a partial cross-section view of a pneumatic tyre according to the present invention.

### Detailed description of the preferred embodiments

In Figure 1, a tyre 1 comprises a carcass structure 2 obtained with a conventional tyre manufacturing process. In fact, the carcass structure 2 comprises at least one carcass ply 2a, the opposite side edges of which are externally folded up around respective annular reinforcing structures 3, usually known as bead wires.

Alternatively (said embodiment being not shown), each carcass ply 2a has its ends integrally associated with the bead wire 3, as disclosed in EP-928 680.

The bead wire 3 is enclosed in a bead 4 defined along an inner circumferential edge of the pneumatic tyre 1 and at which the pneumatic tyre engages on a rim (not shown) forming part of the wheel of a vehicle.

The tyre 1 comprises a pair of sidewalls 7 which are located in axially opposite positions with respect to the carcass structure 2.

The tyre 1 also comprises a tread band 6 in a position radially external to the carcass structure 2. The tread band 6, comprising the elastomeric composition of the invention, wherein, at the end of the curing and moulding steps, a raised pattern is formed for the tyre ground contact. In Figure 1 the tread band 6 is provided with a plurality of grooves 11 which define a plurality of ribs and blocks of the tyre tread pattern.

The tyre 1 further comprises a reinforcing structure 5, usually known as belt structure, which is positioned between the carcass structure 2 and the tread band 6. Preferably, the belt structure 5 includes at least two radially superposed layers 8, 9 of rubberised fabric provided with reinforcing cords, usually of metal material, disposed parallel to each other in each layer and in crossed relationship with the cords of the adjacent layer, preferably symmetrically disposed with respect to the equatorial plane II-II of the tyre. Preferably, the belt structure 5 further comprises, at a radially external position of said belt layers 8, 9, at least one further layer 10 of textile or metallic cords substantially circumferentially disposed, said cords being spirally and coaxially wound at a radially outer position with respect to the belt layers 8, 9.

In the embodiment shown in Figure 1, the tyre 1 is further provided with a layer 12 of a suitable elastomeric material interposed between the tread band 6 and the belt structure 5. Preferably, the layer 12 has the function of improving the adhesion between the tread band 6 and the belt structure 5.

Finally, in tyres of the tubeless type, i.e. devoid of an air inner bladder, a radially internal elastomeric layer 13, i.e. the liner, is present which has imperviousness features to ensure the tyre air-tightness.

The process for producing the tyre according to the present invention may be carried out according to techniques and using apparatus that are known in the art, as described, for example, in EP 199,064, US 4,872,822, US 4,768,937, said process including at least one stage of manufacturing the green tyre and at least one stage of vulcanising this tyre.

More particularly, the process for producing the tyre comprises the stages of preparing, beforehand and separately from each other, a series of semi-finished products corresponding to the various structural elements of the tyre (carcass plies, belt structure, bead wires, fillers, sidewalls and tread band) which are then combined together using a suitable manufacturing machine. Next, the subsequent vulcanisation stage welds the abovementioned semi-finished products together to give a monolithic block, i.e. the finished tyre.

The stage of preparing the abovementioned semi-finished products will be preceded by a stage of preparing and moulding the various blends, of which said semi-finished products are made, according to conventional techniques.

The green tyre thus obtained is then passed to the subsequent stages of moulding and vulcanisation. To this end, a vulcanisation mould is used which is designed to receive the tyre being processed inside a moulding cavity having walls which are countermoulded to define the outer surface of the tyre when the vulcanisation is complete.

Alternative processes for producing a tyre or parts of a tyre without using semi-finished products are disclosed, for example, in EP 928,680, mentioned above, and EP 928,702.

The green tyre can be moulded by introducing a pressurized fluid into the space defined by the inner surface of the tyre, so as to press the outer surface of the green tyre against the walls of the moulding cavity. In one of the moulding methods widely practised, a vulcanisation chamber made of elastomeric material, filled with steam and/or another fluid under pressure, is inflated inside the tyre closed inside the moulding cavity. In this way, the green tyre is pushed against the inner walls of the moulding cavity, thus obtaining the desired moulding. Alternatively, the moulding can be carried out without an inflatable vulcanisation chamber, by providing inside the tyre a toroidal metal support shaped according to the configuration of the inner surface of the tyre to be obtained as described, for example, in EP 242 840. The difference in coefficient of thermal expansion between the toroidal metal support and the crude elastomeric material is exploited to achieve an adequate moulding pressure.

At this point, the stage of vulcanising the crude elastomeric material present in the tyre is carried out. To this end, the outer wall of the vulcanisation mould is placed in contact with a heating fluid (generally steam) such that the outer wall reaches a maximum temperature generally of between 100°C and 230°C. Simultaneously, the inner surface of the tyre is heated to the vulcanisation temperature using the same pressurized fluid used to press the tyre against the walls of the moulding cavity, heated to a maximum temperature of between 100°C and 250°C. The time required to obtain a satisfactory degree of vulcanisation throughout the mass of the elastomeric material can vary in general between 3 min and 90 min and depends mainly on the dimensions of the tyre. When the vulcanisation is complete, the tyre is removed from the vulcanisation mould.

The present invention will be further illustrated below by means of a number of preparation examples.

### EXAMPLES 1-6

### Preparation of the elastomeric compositions

The elastomeric compositions given in Table 1 were prepared as follows (the amounts of the components are given in phr).

All the components, except sulphur, CBS and DPG80, were mixed together in an internal mixer (model Pomini PL 1.6) for about 5 min (1^{st} Step). As soon as the temperature reached 145±5°C, the elastomeric material was discharged. The sulphur, and CBS and DPG80 were then added and mixing was carried out in an open roll mixer (2^{nd} Step).

**TABLE 1**

| Example | 1(*) | 2(*) | 3 | 4 | 5(*) |
|---|---|---|---|---|---|
| S-SBR | 100.00 | 89.41 | 89.41 | 78.75 | 78.75 |
| Brominated butyl 2030 | ----- | 10.59 | 10.59 | 21.25 | 21.25 |
| Phenolic resin | 7.29 | 7.29 | 7.29 | 7.29 | 7.29 |
| Aromatic oil | 21.86 | 25.85 | 25.85 | 29.84 | 29.84 |
| Zeosil® 1165 | 116.58 | 116.64 | 116.64 | 116.69 | 116.69 |
| AMEO | ----- | ----- | 1.46 | 2.92 | 5.83 |
| Silane X50S | 11.66 | 11.66 | 11.66 | 11.67 | 11.67 |
| DGP 80 | 1.46 | 1.46 | 1.46 | 1.46 | 1.46 |
| CBS | 3.35 | 3.35 | 3.35 | 3.35 | 3.35 |
| Sulphur | 1.46 | 1.46 | 1.46 | 1.46 | 1.46 |

| | | | | | |
|---|---|---|---|---|---|
| (*): comparative. S-SBR: solution butadiene-styrene copolymer, with a styrene content equal to 20% by weight and a content of vinyl groups equal to 60% by weight (product HP752 from Japan Synthetic Rubber) Brominated butyl 2030: Bayer (bromine content of 1.8 ± 0.2 wt%) Phenolic resin: octylphenolic resin (Durez® 29095 by Occidental) Aromatic oil: Agip Esar-90 (produced by Agip) Zeosil® 1165: precipitated silica with a BET surface area equal to about 165 m²/g (Rhodia Silica System) AMEO: 3-aminopropyl-triethoxysilane (Dynasilan® AMEO, produced by Sivento-Degussa) Silane X50S: bis(3-triethoxysilylpropyl) tetrasulphide silane comprising 50 wt% of carbon black and 50 wt% of bis-(3-triethoxysilylpropyl) tetrasulphide (produced by Degussa); DGP 80: accelerating agent (diphenylguanidine from Monsanto) CBS: accelerating agent (N-cyclohexyl-2-benzo-thiazylsulphenamide - product Santocure® CBS by Monsanto) | | | | | |

In the following Table 2, mechanical, dynamic and static characteristics of the compositions of Table 1 are reported.

**TABLE 2**

| | 1(*) | 2(*) | 3 | 4 | 5(*) |
|---|---|---|---|---|---|
| Mooney viscosity | 89.8 | 80.3 | 78.3 | 72.3 | 71.4 |
| Scorch time (minutes) | 32.510 | 34.850 | 27.670 | 21.530 | 18.180 |
| CA1 @23°C (MPa) | 1.480 | 1.300 | 1.360 | 1.650 | 1.770 |
| CA1 @70°C (MPa) | 1.305 | 1.250 | 1.290 | 1.530 | 1.620 |
| CA3 @23°C (MPa) | 5.315 | 4.510 | 5.370 | 6.950 | 7.730 |
| CA3 @70°C (MPa) | 4.695 | 4.170 | 4.840 | 6.010 | 6.670 |
| Stress at break (MPa) | 12.230 | 11.300 | 11.080 | 10.340 | 11.000 |
| IRHD10°C | 82.200 | 80.600 | 81.500 | 76.900 | 71.300 |
| IRHD70°C | 72.100 | 70.700 | 67.600 | 66.100 | 61.100 |
| Tanδ 10°C (9%) | 0.493 | 0.511 | 0.510 | 0.575 | 0.624 |
| Tanδ 50°C (9%) | 0.256 | 0.264 | 0.262 | 0.272 | 0.274 |
| Abrasion DIN (mm³) | 270.2 | 322.0 | 275.0 | 288.0 | 316.0 |

The Mooney viscosity ML(1+4) at 100°C was measured, according to ISO standard 289/1, on the non-crosslinked materials obtained as described above.

The scorch time was measured at 127°C according to ISO standard 289/1.

CA1 and CA3 are, respectively, the modulus at 100% and a 300% deformation measured according to ISO standard 37-2.

The stress at break was measured at 70°C according to ISO 37-2 on dumbbell specimens.

IRHD (International Rubber Hardness Degree) at 10°C and at 70°C according to ISO standard 48 was measured on samples of said elastomeric materials cross-linked at 150°C for 30 minutes.

Tanδ 0°C and 50°C are the ratio between the viscous modulus (E") and the elastic modulus (E') measured at, respectively, 10°C and 50°C;

Abrasion DIN is the amount of compound removed by operating under the standard conditions given in DIN standard 53516.

With reference to the samples mentioned above, for each of the tested property the Applicant calculated the root-mean-square deviation σ and the scattering coefficient V in order to quantify the scattering of the measured values from the average value.

The comparative composition of Example 1 is a standard elastomeric composition of the so-called "rain-type" for racetrack.

By partially replacing SBR with a halogenated butyl rubber (comparative composition of Example 2) and employing a sulphur-containing silane but not an aminosilane according to the invention, the static modulus values decrease both at 23°C and 70°C, indicating a worsening of the tyre handling, and the abrasion of the tread band is too high for use as a tyre tread.

The comparative composition of Example 5 contains the same amount of halogenated butyl rubber of that of Example 4 according to the invention, but a high content of aminosilane which causes difficulties in the processability due to the decrease of the scorch time.

In addition the abrasion value of the comparative composition of Example 5 is substantially as high as that of the Example 2 not containing aminosilane. In other words, exceeding amounts of aminosilane decrease the abrasion resistance of the tread band.

Also, it should be noted that even if it is desirable to provide a composition with high values of static modulus, such values should not be excessive. Excessive static modulus values could compromise a proper deformation of the tread band under the footprint, which is important for the grip.

The compositions of Example 3 and 4 according to the invention show parameters suitable for the manufacturing in an industrial plant and are endowed with characteristics such as modulus, hardness and abrasion resistance that are well balanced so as to provide the tyre of the invention with the sought performance features (grip, handling, road holding) on wet or icy/snowed surface even under extreme driving conditions.

Comparing the compositions of the invention with those set forth by the prior art, it is noted that the elastomeric compositions according to EP 1 111 004 show poor abrasion resistance and poor tanδ values at 50°C. As for the compositions according to EP 1 236 767, they display very low values of tanδ at 0°C, unsuitable for providing a good grip at low temperature, for example on wet or icy/snowed surfaces.

## Claims

1. Pneumatic tyre comprising:
- a carcass structure with at least one carcass ply shaped in a substantially toroidal configuration, the opposite lateral edges of which are associated with respective right-hand and left-hand bead wires, each bead wire being enclosed in a respective bead;
- a belt structure comprising at least one belt layer applied in a circumferentially external position relative to said carcass structure;
- a tread band superimposed circumferentially on said belt structure comprising a radially outer layer designed to come into contact with the ground; and
- a pair of sidewalls applied laterally on opposite sides relative to said carcass structure;
wherein said tread band includes an elastomeric material obtained by cross-linking a cross-linkable elastomeric composition comprising:
a) from 15 phr to 95 phr of at least one styrene-butadiene rubber;
b) from 5 phr to 30 phr of at least one halogenated butyl rubber;
c) from 0 phr to 60 phr of at least one diene rubber other than a);
d) from 0.3 phr to 3.5 phr of at least one aminosilane containing at least one hydroxy group or hydrolysable group attached to the silicon atom of the silane;
e) from 10 phr to 140 phr of at least one silica filler; and
f) from 0.5 phr to 25 phr of at least one sulphur-containing silane with at least one hydroxy group or hydrolysable group attached to the silicon atom of the silane.

2. Pneumatic tyre according to claim 1 wherein the elastomeric composition comprises from 75 phr to 93 phr of a styrene-butadiene rubber a).

3. Pneumatic tyre according to claim 1 wherein the elastomeric composition comprises from 7 phr to 25 phr of a halogenated butyl rubber b).

4. Pneumatic tyre according to claim 1 wherein the halogenated butyl rubber is a brominated butyl rubber.

5. Pneumatic tyre according to claim 1 wherein the halogenated butyl rubber is obtained by halogenation of butyl rubber, that is a copolymer of isobutylene and at least one comonomer selected from C₄ to C₆ conjugated diolefins; and alkyl-substituted vinyl aromatic comonomers.

6. Pneumatic tyre according to claim 5 wherein the diolefin is isoprene.

7. Pneumatic tyre according to claim 5 wherein isoprene is in an amount of from 1 wt% to 3 wt% and isobutylene is in an amount of from 97 wt% to 99 wt% .

8. Pneumatic tyre according to claim 1 wherein the halogenated butyl rubber has a halogen content of from 0.5 wt% to 4 wt%.

9. Pneumatic tyre according to claim 8 wherein the halogenated butyl rubber has a halogen content of from 0.75 wt% to 3 wt%.

10. Pneumatic tyre according to claim 1 wherein the halogenated butyl rubber has a molar unsaturation comprised between 0.5% and 15%.

11. Pneumatic tyre according to claim 1 wherein the elastomeric composition comprises from 0 phr to 30 phr of a diene rubber c).

12. Pneumatic tyre according to claim 1 wherein c) is absent.

13. Pneumatic tyre according to claim 1 wherein the diene rubber c) is selected from: polyisoprene; polybutadiene; isoprene/isobutene copolymers; 1,3-butadiene/acrylonitrile copolymers; styrene/isoprene/1,3-butadiene copolymers; styrene/1,3-butadiene/acrylonitrile copolymers; or mixtures thereof.

14. Pneumatic tyre according to claim 1 wherein the elastomeric composition comprises from 1 phr to 3 phr of an aminosilane d).

15. Pneumatic tyre according to claim 1 wherein in the elastomeric composition the weight ratio between b) and d) components is of from 2 to 12.

16. Pneumatic tyre according to claim 15 wherein in the elastomeric composition the weight ratio between b) and d) components is of from 5 to 8.

17. Pneumatic tyre according to claim 1 wherein the aminosilane d) has the following formula (I) 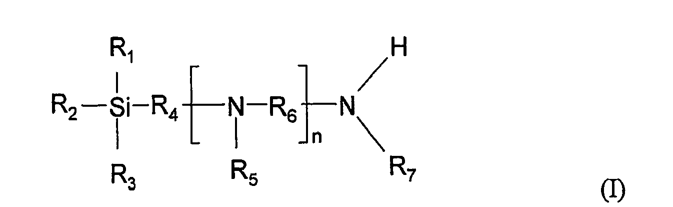 wherein:
R₁, R₂ and R₃, which may be identical or different, are selected from hydrogen, hydroxy, C₁-C₈ alkoxy groups, C₁-C₁₈ alkyl groups, C₆-C₂₀ aryl groups, C₇-C₃₀ alkylaryl or arylalkyl groups, with the proviso that at least one of the groups R₁, R₂ and R₃ represents an hydroxy or an hydrolysable group;
R₄ is selected from linear or branched C₁-C₁₈ aliphatic chains groups, C₆-C₂₀ arylene groups, said arylene groups optionally being substituted with C₁-C₈ aliphatic groups;
R₅ and R₇, which may be identical or different, are selected from hydrogen, C₁-C₁₈ alkyl groups; or, when R₅ and R₇ are other than hydrogen, they may form, together with the nitrogen atoms to which they are attached, 5- or 6-membered heterocyclic rings;
R₆ is chosen from linear or branched C₁-C₁₈ alkylene groups, C₆-C₁₄ arylene groups, arylene groups optionally substituted with C₁-C₁₈ alkyl groups, C₇-C₃₀ alkylenearylene or arylenealkylene groups, C₃-C₃₀ cycloalkylene groups, said cycloalkylene groups optionally being substituted with C₁-C₁₈ alkyl groups;
n is a integer from 0 to 5.

18. Pneumatic tyre according to claim 17 wherein all of R₁, R₂ and R₃ are hydrolysable groups.

19. Pneumatic tyre according to claim 18 wherein all of R₁, R₂ and R₃ are, C₁-C₈ alkoxy groups.

20. Pneumatic tyre according to claim 19 wherein all of R₁, R₂ and R₃ are,, C₁-C₃ alkoxy groups.

21. Pneumatic tyre according to claim 17 wherein R₄ is a C₁-C₃ aliphatic chain.

22. Pneumatic tyre according to claim 21 wherein R₄ is a C₁-C₃ alkylene chain.

23. Pneumatic tyre according to claim 17 wherein R₇ is hydrogen.

24. Pneumatic tyre according to claim 17 wherein n is 0.

25. Pneumatic tyre according to claim 1 wherein the aminosilane d) is selected from 2-aminoethyl-trimethoxysilane, 2-aminoethyl-triethoxysilane, 2-aminoethyl-tripropoxysilane, 2-aminoethyl-tributoxysilane, 3-aminopropyl-trimethoxysilane, 3-aminopropyl-triethoxysilane, 3-aminopropylmethyl-diethoxysilane, N-2-(vinylbenzylamino)-ethyl-3-aminopropyl-trimethoxysilane, N-(2-aminoethyl)-3-aminopropyl-trimethoxysilane, N-2-(aminoethyl)-3 aminopropyltris(2-ethylhexoxy)silane, 3-aminopropyldiisopropyl-ethoxysilane, N-(6-aminohexyl)-aminopropyl-trimethoxysilane, 4-aminobutyl-triethoxysilane, 4-aminobutyldimethyl-methoxysilane, triethoxy-silylpropyl-diethylenetriamine, 3-aminopropyltris-(methoxyethoxyethoxy)silane, N-(2-aminoethyl)-3-aminopropyl-trimethoxysilane, N-2-(aminoethyl)-3-aminopropyltris(2-ethylhexoxy)-silane, 3-aminopropyldiisopropyl-ethoxysilane, N-(6-aminohexyl)aminopropyl-trimethoxysilane, 4-aminobutyl-triethoxysilane, and (cyclohexylaminomethyl)-methyl-diethoxysilane.

26. Pneumatic tyre according to claim 1 wherein the aminosilane d) is 3-aminopropyl-triethoxysilane.

27. Pneumatic tyre according to claim 1 wherein the elastomeric composition comprises from 40 phr to 110 phr of silica filler e).

28. Pneumatic tyre according to claim 1 wherein the elastomeric composition comprises at least one carbon black reinforcing filler.

29. Pneumatic tyre according to claim 28 wherein said carbon black reinforcing filler is present in an amount of from 20 phr to 90 phr.

30. Pneumatic tyre according to claim 1 wherein the elastomeric composition comprises from 5 phr to 15 phr of a sulphur-containing silane f).

31. Pneumatic tyre according to claim 1 wherein the sulphur-containing silane f) has a formula (II)
(R)₃Si-CₙH₂ₙ-X (II)
wherein the groups R, which may be identical or different, are selected from: hydroxy, alkyl, alkoxy or aryloxy groups or from halogen atoms, on condition that at least one of the groups R is a hydroxy, alkoxy or aryloxy group; n is an integer between 1 and 6 inclusive; X is a group selected from: nitroso, mercapto, amino, epoxide, vinyl, imide, chloro, -(S)ₘCₙH₂ₙ-Si-(R)₃ in which m and n are integers between 1 and 6 inclusive and the groups R are defined as above.

32. Pneumatic tyre according to claim 1 wherein the sulphur-containing silane f) is selected from: bis[3-(trimethoxysilyl)propyl]-tetrasulfane, bis[3-(triethoxysilyl)propyl]disulfane, bis[2-(trimethoxysilyl)ethyl]tetrasulfane, bis[2-(triethoxysilyl)ethyl]trisulfane, bis[3-(trimethoxysilyl)propyl]disulfane, 3-mercaptopropyltrimethoxysilane, 3-mercaptopropylmethyldiethoxysilane, and 3-mercaptoethylpropylethoxymethoxysilane.

33. Pneumatic tyre according to claim 1 wherein the sulphur-containing silane f) is selected from bis[3-(trimethoxysilyl)propyl]-tetrasulfane and bis(3-triethoxysilylpropyl) disulphide.

34. Pneumatic tyre according to claim 1 wherein the elastomeric composition comprises sulphur or at least one sulphur donor.

35. Pneumatic tyre according to claim 1 wherein the elastomeric composition comprises at least one resin cure system.

36. Pneumatic tyre according to claim 35 wherein the resin cure system is in an amount of from 1 to 15 phr.

37. Pneumatic tyre according to claim 1 wherein the elastomeric composition comprises a plasticizer in an amount of from 2 phr to 100 phr.

38. Pneumatic tyre according to claim 37 wherein the elastomeric composition comprises a plasticizer in an amount of from 5 phr to 70 phr.

39. Cross-linkable elastomeric composition comprising:
a) from 15 phr to 95 phr of at least one styrene-butadiene rubber;
b) from 5 phr to 30 phr of at least one halogenated butyl rubber;
c) from 0 phr to 60 phr of at least one diene rubber other than a);
d) from 0.3 phr to 3.5 phr of at least one aminosilane containing at least one hydroxy group or hydrolysable group attached to the silicon atom of the silane;
e) from 10 phr to 140 phr of at least one silica filler; and
f) from 0.5 phr to 25 phr of at least one sulphur-containing silane with at least one hydroxy group or hydrolysable group attached to the silicon atom of the silane.

## Patentansprüche

1. Luftreifen
- mit einem Karkassenaufbau mit wenigstens einer Karkassenlage, die im Wesentlichen in eine Toroidform gebracht ist und deren gegenüberliegenden Seiteurändern rechte bzw. linke Wulstdrähte zugeordnet sind, von denen jeder in einem entsprechenden Wulst eingeschlossen ist,
- mit einem Gurtaufbau, der wenigstens eine Gurtauflage aufweist, die in einer am Umfang äußeren Position bezüglich des Karkassenaufbaus aufgebracht ist,
- mit einem Laufflächenband, das am Umfang auf den Gurtaufbau aufgelegt ist und eine radial äußere Schicht aufweist, die für ein In-Kontakt-Kommen mit dem Boden ausgelegt ist, und
- mit einem Paar von Seitenwänden, die seitlich auf gegenüberliegenden Seiten bezüglich des Karkassenaulbaus angebracht sind,
- wobei das Laufflächenband ein elastomeres Material einschließt, das durch Vernetzen einer vernetzbaren elastomeren Mischung erhalten wird, die
a) 15 phr bis 95 phr wenigstens eines Styrol-Butadien-Kautschuks,
b) 5 phr bis 30 phr wenigstens eines halogenierten Butylkautschuks;
c) 0 phr bis 60 phr wenigstens eines Dienkautschuks, der anders als a) ist,
d) 0,3 phr bis 3,5 phr wenigstens eines Aminosilans, das wenigstens eine Hydroxygruppe oder eine hydrolysierbare Gruppe enthält, die mit dem Siliciumatom des Silans verbunden ist,
e) 10 phr bis 140 phr wenigstens eines Siliciumdioxidfüllstoffs, und
f) 0,5 phr bis 25 phr wenigstens eines Schwefel enthaltenden Silans mit wenigstens einer Hydroxygruppe oder einer hydrolysierbaren Gruppe aufweist, die mit dem Siliciumatom des Silans verbunden ist.

2. Luftreifen nach Anspruch 1, bei welchem die elastomere Mischung 75 phr bis 93 phr eines Styrol-Butadien-Kautschuks nach a) aufweist.

3. Luftreifen nach Anspruch 1, bei welchem die elastomere Mischung 7 phr bis 25 phr eines halogenierten Butylkautschuks nach b) aufweist.

4. Luftreifen nach Anspruch 1, bei welchem der halogenierte Butylkautschuk ein bromierter Butylkautschuk ist.

5. Luftreifen nach Anspruch 1, bei welchem der halogenierte Butylkautschuk durch Halogenierung von Butylkautschuk erhalten wird, d.h. einem Copolymer von Isobutylen und wenigstens einem aus konjugierten C₄- bis C₆-Diolefinen ausgewählten Comonomer sowie alkylsubstituierten aromatischen Vinylcomonomeren.

6. Luftreifen nach Anspruch 5, bei welchem das Diolefin Isopren ist.

7. Luftreifen nach Anspruch 5, bei welchem das Isopren in einer Menge von 1 Gewichtsprozent bis 3 Gewichtsprozent und das Isobutylen in einer Menge von 97 Gewichtsprozent bis 99 Gewichtsprozent vorliegt.

8. Luftreifen nach Anspruch 1, bei welchem der halogenierte Butylkautschuk einen Halogengehalt von 0,5 Gewichtsprozent bis 4 Gewichtsprozent hat.

9. Luftreifen nach Anspruch 8, bei welchem der halogenierte Butylkautschuk einen Halogengehalt von 0,75 Gewichtsprozent bis 3 Gewichtsprozent hat.

10. Luftreifen nach Anspruch 1, bei welchem der halogenierte Butylkautschuk eine molare Unsättigung zwischen 0,5% und 15% hat.

11. Luftreifen nach Anspruch 1, bei welchem die elastomere Mischung 0 phr bis 30 phr eines Dienkautschuks nach c) aufweist.

12. Luftreifen nach Anspruch 1, bei welchem c) nicht vorhanden ist.

13. Luftreifen nach Anspruch 1, bei welchem der Dienkautschuk nach c) aus Polyisopren; Polybutadien; Isopren-Isobuten-Copolymeren; 1,3-Butadien-Acrylnitril-Copolymeren; Styrol-Isopren-1,3-Butadien-Copolymeren; Styrol-1,3-Butadien-Acrylnitril-Copolymeren oder Mischungen davon ausgewählt wird.

14. Luftreifen nach Anspruch 1, bei welchem die elastomere Mischung 1 phr bis 3 phr eines Aminosilans nach d) aufweist.

15. Luftreifen nach Anspruch 1, bei welchem bei der elastomeren Mischung das Gewichtsverhältnis zwischen den Komponenten nach b) und d) 2 bis 12 beträgt.

16. Luftreifen nach Anspruch 15, bei welchem bei der elastomeren Mischung das Gewichtsverhältnis zwischen den Komponenten nach b) und d) 5 bis 8 beträgt.

17. Luftreifen nach Anspruch 1, bei welchem das Aminosilan nach d) die folgende Formel (I) hat: 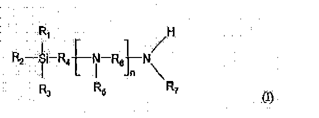 wobei
R₁, R₂ und R₃, die gleich oder verschieden sein können, aus Wasserstoff, Hydroxy-, C₁- bis C₈-Alkoxygruppen, C₁- bis C₁₈-Alkylgruppen, C₆- bis C₂₀-Arylgruppen, C₇-bis C₃₀-Alkylaryl- oder Arylalkylgruppen mit der Maßgabe ausgewählt werden, dass wenigstens eine der Gruppen R₁, R₂ und R₃ für eine Hydroxygruppe oder eine hydrolysierbare Gruppe steht,
R₄ aus linearen oder verzweigten Gruppen von aliphatischen Ketten mit C₁ bis C₁₈ oder C₆- bis C₂₀-Arylengruppen ausgewählt wird und die Arylengruppen fakultativ mit aliphatischen Gruppen von C₁ bis C₈ substituiert sind,
R₅ und R₇, die gleich oder verschieden sein können, aus Wasserstoff, C₁- bis C₁₈-Alkylgruppen ausgewählt werden oder die, wenn R₅ und R₇ nicht aus Wasserstoff bestehen, zusammen mit den Stickstoffatomen, mit denen sie verbunden sind, 5- oder 6-gliedrige heterocyclische Ringe bilden können, und
R₆ aus linearen oder verzweigten C₁- bis C₁₈-Alkylengruppen, C₆- bis C₁₄-Arylengruppen, wobei die Arylengruppen fakultativ durch C₁- bis C₁₈-Alkylgruppen substituiert sind, aus C₇- bis C₃₀-Alkylenarylen- oder Arylenalkylengruppen oder aus C₃- bis C₃₀-Cycloalkylengruppen ausgewählt wird, wobei die Cycloalkylengruppen fakultativ mit C₁- bis C₁₈-Alkylgruppen substituiert sind, und
n eine ganze Zahl von 0 bis 5 ist.

18. Luftreifen nach Anspruch 17, bei welchem R₁, R₂ und R₃ alle hydrolisierbare Gruppen sind.

19. Luftreifen nach Anspruch 18, bei welchem R₁, R₂ und R₃ alle C₁- bis C₈-Alkoxygruppen sind.

20. Luftreifen nach Anspruch 19, bei welchem R₁, R₂ und R₃ alle C₁- bis C₃-Alkoxygruppen sind.

21. Luftreifen nach Anspruch 17, bei welchem R₄ eine aliphatische Kette mit C₁- bis C₃ ist.

22. Luftreifen nach Anspruch 27, bei welchem R₄ eine C₁- bis C₃-Alkylenkette ist.

23. Luftreifen nach Anspruch 17, bei welchem R₇ Wasserstoff ist.

24. Luftreifen nach Anspruch 17, bei welchem n gleich 0 ist.

25. Luftreifen nach Anspruch 1, bei welchem das Aminosilan nach d) ausgewählt wird aus 2-Aminoethyl-Trimethoxysilan; 2-Aminoethyl-Triethoxysilan; 2-Aminoethyl-Tripropoxysilan; 2-Aminoethyl-Tributoxysilan; 3-Aminopropyl-Trimethoxysilan; 3-Aminopropyl-Triethoxysilan; 3-Aminopropylmethyl-Diethoxysilan;, N-2-(Vinylbenzylamino)-Ethyl-3-Aminopropyl-Trimethoxysilan; N-(2-Aminoethyl)-3-Aminopropyl-Trimethoxysilan; N-2-(Aminoethyl)-3-Aminopropyltris(2-Ethylhexoxy)Silan; 3-Aminopropyldiisopropyl-Ethoxysilan; N-(6-Aminohexyl)-Aminopropyl-Trimethoxysilan; 4-Aminobutyl-Triethoxysilan; 4-Aminobutyldimethyl-Methoxysilan; Triethoxy-Silylpropyl-Diethylentriamin; 3-Aminopropyltris-(Methoxyethoxyethoxy)Silan; N-(2-Aminoethyl)-3-Aminopropyl-Trimethoxysilan, N-2-(Aminoethyl)-3-Aminopropyl-tris(2-Ethylhexoxy)-Silane; 3-Aminopropyldiisopropyl-Ethoxysilan; N-(6-Aminohexyl)Aminopropyl-Trimethoxysilan; 4-Aminobutyl-Triethoxysilan und (Cyclohexylaminomethyl)-Methyl-Diethoxysilan.

26. Luftreifen nach Anspruch 1, bei welchem das Aminosilan nach d) 3-Aminopropyltriethoxysilan ist.

27. Luftreifen nach Anspruch 1, bei welchem die elastomere Mischung 40 phr bis 110 phr Siliciumdioxidfüllstoff nach e) aufweist.

28. Luftreifen nach Anspruch 1, bei welchem die elastomere Mischung wenigstens einen Ruß-Verstärkungsfüllstoff aufweist.

29. Luftreifen nach Anspruch 28, bei welchem der Ruß-Verstärkungsfüllstoff in einer Menge von 20 phr bis 90 phr vorhanden ist.

30. Luftreifen nach Anspruch 1, bei welchem die elastomere Mischung 5 phr bis 15 phr eines Schwefel enthaltenden Silans nach f) aufweist.

31. Luftreifen nach Anspruch 1, bei welchem das Schwefel enthaltende Silan nach f) die Formel (II) hat:
(R)₃Si-CₙH₂ₙ-X (II),
wobei die Gruppen R, die gleich oder verschieden sein können, ausgewählt werden aus Hydroxy-, Alkyl-, Alkoxy- oder Aryloxygruppen oder aus Halogenatomen mit der Maßgabe, dass wenigstens eine der Gruppen R eine Hydroxy-, Alkoxy- oder Aryloxygruppe ist, n eine ganze Zahl zwischen 1 und 6 einschließlich ist, X eine Gruppe ist, die ausgewählt ist aus Nitroso-, Mercapto-, Amino-, Epoxid-, Vinyl-, Imid-, Chlorgruppen oder -(S)ₘCₙH₂ₙ-Si-(R)₃, wobei m und n ganze Zahlen zwischen 1 und 6 einschließlich und die Gruppen R wie vorstehend definiert sind.

32. Luftreifen nach Anspruch 1, bei welchem das Schwefel enthaltende Silan nach f) ausgewählt wird aus bis[3-(Trimethoxysilyl)Propyl]-Tetrasulfan; bis[3- (Triethoxysilyl)Propyl]-Disulfan; bis[2-(Trimethoxysilyl)Ethyl]Tetrasulfan; bis[2-(Triethoxysilyl)Ethyl]-Trisulfan; bis[3-(Trimethoxysilyl)Propyl]-Disulfan, 3-Mercaptopropyltrimethoxysilan; 3-Mercaptopropylmethyldiethoxysilan und 3-Mercaptoethylpropylethoxymethoxysilan.

33. Luftreifen nach Anspruch 1, bei welchem das Schwefel enthaltende Silan nach f) ausgewählt wird aus bis(3-(Trimethoxysilyl)Propyl]-Tetrasulfan und bis(3-Triethoxysilylpropyl)-disulphid.

34. Luftreifen nach Anspruch 1, bei welchem die elastomere Mischung Schwefel oder wenigstens einen Schwefeldonator aufweist.

35. Luftreifen nach Anspruch 1, bei welchem die elastomere Mischung wenigstens ein Harzvulkanisiersystem aufweist.

36. Luftreifen nach Anspruch 35, bei welchem das Harzvulkanisiersystem in einer Menge von 1 bis 15 phr vorliegt.

37. Luftreifen nach Anspruch 1, bei welchem die elastomere Mischung einen Weichmacher in einer Menge von 2 phr bis 100 phr aufweist.

38. Luftreifen nach Anspruch 37, bei welchem die elastomere Mischung einen Weichmacher in einer Menge von 5 phr bis 70 phr aufweist.

39. Vernetzbare elastomere Mischung mit
a) 15 phr bis 95 phr wenigstens eines Styrol-Butadien-Kautschuks,
b) 5 phr bis 3 phr wenigstens eines halogenierten Butylkautschuks;
c) 0 phr bis 60 phr wenigstens eines Dienkautschuks, der anders als a) ist,
d) 0,3 phr bis 3,5 phr wenigstens eines Aminosilans, das wenigstens eine Hydroxygruppe oder eine hydrolysierbare Gruppe enthält, die mit dem Silciumatom des Silans verbunden ist,
e) 10 phr bis 140 phr wenigstens eines Siliciumdioxidfüllstoffs, und
f) 0,5 phr bis 25 phr wenigstens eines Schwefel enthaltenden Silans mit wenigstens einer Hydroxygruppe oder einer hydrolysierbaren Gruppe, die mit dem Siliciumatom des Silans verbunden ist.

## Revendications

1. Pneumatique comprenant :
- une structure de carcasse qui comporte au moins une nappe de carcasse, de forme sensiblement toroïdale, et dont les bords opposés sont respectivement associés à des tringles de talon droit et de talon gauche, chacune de ces tringles étant noyée dans le talon correspondant ;
- une structure de ceinture, qui comporte au moins une couche de ceinture, placée en position de pourtour extérieur par rapport à ladite structure de carcasse ;
- une bande de roulement, placée par-dessus et sur le pourtour de ladite structure de ceinture, comportant une couche placée en situation radialement externe et conçue pour entrer en contact avec le sol ;
- et une paire de flancs, placés latéralement sur les bords opposés
de ladite structure de carcasse ;
dans lequel pneumatique ladite bande de roulement contient un matériau élastomère obtenu par réticulation d'une composition élastomère réticulable qui comprend :
a) de 15 à 95 pcppe (parties pour cent parties de polymères élastomères) d'au moins un caoutchouc à base de styrène et de butadiène ;
b) de 5 à 30 pcppe d'au moins un caoutchouc butyl halogéné ;
c) de 0 à 60 pcppe d'au moins un caoutchouc à base de diène autre que le caoutchouc (a) ;
d) de 0,3 à 3,5 pcppe d'au moins un aminosilane dont l'atome de silicium porte au moins un groupe hydroxyle ou un groupe hydrolysable lié ;
e) de 10 à 140 pcppe d'au moins une charge de type silice ;
f) et de 0,5 à 25 pcppe d'au moins un silane soufré dont l'atome de silicium porte au moins un groupe hydroxyle ou un groupe hydrolysable lié.

2. Pneumatique conforme à la revendication 1, pour lequel la composition élastomère contenait de 75 à 93 pcppe de caoutchouc (a) à base de styrène et de butadiène.

3. Pneumatique conforme à la revendication 1, pour lequel la composition élastomère contenait de 7 à 25 pcppe de caoutchouc butyl halogéné (b).

4. Pneumatique conforme à la revendication 1, pour lequel le caoutchouc butyl halogéné était un caoutchouc butyl bromé.

5. Pneumatique conforme à la revendication 1, pour lequel le caoutchouc butyl halogéné a été obtenu par halogénation d'un caoutchouc butyl, c'est-à-dire un copolymère d'isobutène et d'au moins un comonomère choisi parmi les diènes conjugués en C₄₋₆ et les comonomères vinyl-aromatiques à substituant(s) alkyle.

6. Pneumatique conforme à la revendication 5, pour lequel le diène a été de l'isoprène.

7. Pneumatique conforme à la revendication 6, pour lequel on a utilisé de 1 à 3 % en poids d'isoprène et de 97 à 99 % en poids d'isobutène.

8. Pneumatique conforme à la revendication 1, pour lequel le caoutchouc butyl halogéné contenait de 0,5 à 4 % en poids d'halogène.

9. Pneumatique conforme à la revendication 8, pour lequel le caoutchouc butyl halogéné contenait de 0,75 à 3 % en poids d'halogène.

10. Pneumatique conforme à la revendication 1, pour lequel le caoutchouc butyl halogéné présentait un degré molaire d'insaturation de 0,5 à 15 %.

11. Pneumatique conforme à la revendication 1, pour lequel la composition élastomère contenait de 0 à 30 pcppe de caoutchouc (c) à base de diène.

12. Pneumatique conforme à la revendication 1, pour lequel on n'a pas employé de caoutchouc (c).

13. Pneumatique conforme à la revendication 1, pour lequel le caoutchouc (c) à base de diène a été choisi parmi les suivants : polyisoprène, polybutadiène, copolymères d'isoprène et d'isobutène, copolymères de buta-1,3-diène et d'acrylonitrile, copolymères de styrène, d'isoprène et de buta-1,3-diène, et copolymères de styrène, de buta-1,3-diène et d'acrylonitrile, ainsi que les mélanges de tels polymères.

14. Pneumatique conforme à la revendication 1, pour lequel la composition élastomère contenait de 1 à 3 pcppe d'aminosilane (d).

15. Pneumatique conforme à la revendication 1, pour lequel, dans la composition élastomère, le rapport pondéral entre les composants (b) et (d) valait de 2 à 12.

16. Pneumatique conforme à la revendication 15, pour lequel, dans la composition élastomère, le rapport pondéral entre les composants (b) et (d) valait de 5 à 8.

17. Pneumatique conforme à la revendication 1, pour lequel l'aminosilane (d) était un composé de formule (I) suivante : 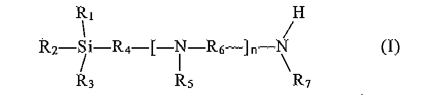 dans laquelle
- R₁, R₂ et R₃ représentent des entités qui peuvent être identiques ou différentes et qui sont choisies parmi un atome d'hydrogène et les groupes hydroxyle, alcoxy en C₁₋₈, alkyle en C₁₋₁₈, aryle en C₆₋₂₀, et alkyl-aryle ou aryl-alkyle en C₇₋₃₀, sous réserve qu'au moins l'un de ces symboles R₁, R₂ et R₃ représente un groupe hydroxyle ou un groupe hydrolysable ;
- R₄ représente une entité choisie parmi les groupes aliphatiques en C₁₋₁₈ à chaîne linéaire ou ramifiée et les groupes arènediyle en C₆₋₂₀, lesquels groupes arènediyle peuvent, en option, porter en tant que substituants des groupes aliphatiques en C₁₋₈ ;
- R₅ et R₇ représentent des entités qui peuvent être identiques ou différentes et qui sont choisies parmi un atome d'hydrogène et les groupes alkyle en C₁₋₁₈, étant entendu que, si R₅ et R₇ représentent autre chose que des atomes d'hydrogène, ils peuvent représenter des groupes qui constituent, avec les atomes d'azote auxquels ils sont liés, des groupes hétérocycliques à 5 ou 6 chaînons ;
- R₆ représente une entité choisie parmi les groupes alcanediyle en C₁₋₁₈ à chaîne linéaire ou ramifiée, les groupes arènediyle en C₆₋₁₄, les groupes arènediyle portant en option des substituants alkyle en C₁₋₁₈, les groupes alcanediyle-arènediyle ou arènediyle-alcanediyle en C₇₋₃₀, et les groupes cycloalcanediyle en C₃₋₃₀, lesquels groupes cycloalcanediyle peuvent, en option, porter des substituants alkyle en C₁₋₁₈ ;
- et l'indice n est un nombre entier qui vaut de 0 à 5.

18. Pneumatique conforme à la revendication 17, pour lequel les symboles R₁, R₂ et R₃ représentaient tous des groupes hydrolysables.

19. Pneumatique conforme à la revendication 18, pour lequel les symboles R₁, R₂ et R₃ représentaient tous des groupes alcoxy en C₁₋₈.

20. Pneumatique conforme à la revendication 19, pour lequel les symboles R₁, R₂ et R₃ représentaient tous des groupes alcoxy en C₁₋₃.

21. Pneumatique conforme à la revendication 17, pour lequel R₄ représentait un groupe aliphatique à chaîne en C₁₋₃.

22. Pneumatique conforme à la revendication 21, pour lequel R₄ représentait un groupe alcanediyle à chaîne en C₁₋₃.

23. Pneumatique conforme à la revendication 17, pour lequel R₇ représentait un atome d'hydrogène.

24. Pneumatique conforme à la revendication 17, pour lequel l'indice n valait 0.

25. Pneumatique conforme à la revendication 1, pour lequel l'aminosilane (d) avait été choisi parmi les suivants : 2-aminoéthyl-triméthoxy-silane, 2-aminoéthyl-triéthoxy-silane, 2-aminoéthyl-tripropoxy-silane, 2-aminoéthyl-tributoxy-silane, 3-aminopropyl-triméthoxy-silane, 3-aminopropyl-triéthoxy-silane, 3-aminopropyl-méthyl-diéthoxy-silane, N-[2-(vinylbenzylamino)éthyl]-3-aminopropyl-triméthoxy-silane, N-(2-aminoéthyl)-3-aminopropyl-triméthoxy-silane, N-(2-aminoéthyl)-3-aminopropyl-tris(2-éthyl-hexyloxy)-silane, 3-aminopropyl-diisopropyl-éthoxy-silane, N-(6-aminohexyl)-aminopropyl-triméthoxy-silane, 4-amino-butyl-triéthoxy-silane, 4-aminobutyl-diméthyl-méthoxy-silane, triéthoxy-silyl-propyl-diéthylènetriamine, 3-aminopropyl-tris(méthoxy-éthoxy-éthoxy)-silane, N-(2-aminoéthyl)-3-aminopropyl-triméthoxy-silane, N-(2-aminoéthyl)-3-aminopropyl-tris(2-éthyl-hexyloxy)-silane, 3-aminopropyl-diisopropyl-éthoxy-silane, N-(6-aminohexyl)-aminopropyl-triméthoxy-silane, 4-amino-butyl-triéthoxy-silane et (cylohexyl-aminométhyl)-méthyl-diéthoxy-silane.

26. Pneumatique conforme à la revendication 1, pour lequel l'aminosilane (d) était du 3-aminopropyl-triéthoxy-silane.

27. Pneumatique conforme à la revendication 1, pour lequel la composition élastomère contenait de 40 à 110 pcppe de charge de type silice (e).

28. Pneumatique conforme à la revendication 1, pour lequel la composition élastomère contenait au moins une charge renforçante de type noir de carbone.

29. Pneumatique conforme à la revendication 28, pour lequel la charge renforçante de type noir de carbone a été employée en une proportion de 20 à 90 pcppe.

30. Pneumatique conforme à la revendication 1, pour lequel la composition élastomère contenait de 5 à 15 pcppe de silane soufré (f).

31. Pneumatique conforme à la revendication 1, pour lequel le silane soufré (f) était un composé de formule (II) ;
(R)₃Si-CₙH₂ₙ-X (II)
dans laquelle
- les entités représentées par R, qui peuvent être identiques ou différentes, sont choisies parmi les atomes d'halogène et les groupes hydroxyle, alkyle, alcoxy et aryloxy, sous réserve qu'au moins l'une de ces entités représentées par R soit un groupe hydroxyle, alcoxy ou aryloxy ;
- l'indice n est un nombre entier valant de 1 à 6, bornes incluses ;
- et X représente une entité choisie parmi les groupes nitroso, sulfhydryle, amino et vinyle, les groupes de type époxyde ou imide, un atome de chlore et les restes de formule -(S)ₘ-CₙH₂ₙ-Si(R)₃ où les indices m et n sont des nombres entiers valant de 1 à 6, bornes incluses, et les entités représentées par R sont telles qu'on les a définies ci-dessus.

32. Pneumatique conforme à la revendication 1, pour lequel le silane soufré (f) a été choisi parmi les suivants : bis[3-(triméthoxy-silyl)-propyl]tétrasulfane, bis[3-(triéthoxy-silyl)propyl]disulfane, bis[2-(triméthoxy-silyl)éthyl]tétrasulfane, bis[2-(triéthoxy-silyl)éthyl]trisulfane, bis[3-(triméthoxy-silyl)propyl]disulfane, (3-mercapto-propyl)-triméthoxy-silane, (3-mercapto-propyl)-méthyl-diéthoxy-silane, et (3-mercapto-éthyl)-propyl-éthoxy-méthoxy-silane.

33. Pneumatique conforme à la revendication 1, pour lequel le silane soufré (f) a été choisi parmi du bis[3-(triméthoxy-silyl)propyl]tétrasulfane et du bis[3-(triéthoxy-silyl)propyl]disulfure.

34. Pneumatique conforme à la revendication 1, pour lequel la composition élastomère contenait du soufre ou au moins un donneur de soufre.

35. Pneumatique conforme à la revendication 1, pour lequel la composition élastomère contenait au moins un système de durcissement de résine.

36. Pneumatique conforme à la revendication 35, pour lequel le système de durcissement de résine a été employé en une proportion de 1 à 15 pcppe.

37. Pneumatique conforme à la revendication 1, pour lequel la composition élastomère contenait un plastifiant, en une proportion de 2 à 100 pcppe.

38. Pneumatique conforme à la revendication 1, pour lequel la composition élastomère contenait un plastifiant en une proportion de 5 à 70 pcppe.

39. Composition élastomère réticulable comprenant :
a) de 15 à 95 pcppe (parties pour cent parties de polymères élastomères) d'au moins un caoutchouc à base de styrène et de butadiène ;
b) de 5 à 30 pcppe d'au moins un caoutchouc butyl halogéné ;
c) de 0 à 60 pcppe d'au moins un caoutchouc à base de diène autre que le caoutchouc (a) ;
d) de 0,3 à 3,5 pcppe d'au moins un aminosilane dont l'atome de silicium porte au moins un groupe hydroxyle ou un groupe hydrolysable lié ;
e) de 10 à 140 pcppe d'au moins une charge de type silice ;
f) et de 0,5 à 25 pcppe d'au moins un silane soufré dont l'atome de silicium porte au moins un groupe hydroxyle ou un groupe hydrolysable lié.
